# NEUE EUROPÄISCHE PATENTSCHRIFT

(11) **EP 0 816 764 B2**
(45) Veröffentlichungstag und Bekanntmachung des Hinweises auf die Entscheidung über den Einspruch: **19.11.2003**
(45) Hinweis auf die Patenterteilung: 14.06.2000
(21) Anmeldenummer: 97106974.5
(22) Anmeldetag: 26.04.1997
(51) Int. Cl.: F24D 3/12

(54) **Warmwasser-Flächenheizung, vorgefertigt für den nachträglichen Einbau**
Prefabricated hot water surface heating for retrofit mounting
Chauffage de surface à eau chaude pré-montée pour la pose ultérieure

(30) Priorität: 17.05.1996 DE 19619912
(43) Veröffentlichungstag der Anmeldung: 07.01.1998
(73) Patentinhaber: Jolly, Jürgen, 66299 Friedrichsthal (DE)
(72) Erfinder: Jolly, Jürgen, 66299 Friedrichsthal (DE)
(74) Vertreter: Bernhardt, Winfrid, Dr.-Ing.

(56) Entgegenhaltungen:
- EP-A- 0 020 894
- EP-A- 0 345 698
- DE-A- 2 702 337
- DE-A- 2 815 416
- DE-A- 4 438 363
- DE-C- 2 735 957
- DE-U- 8 900 824
- TA-Heft:" Aktuell" Ausgabe 06, August 1973
- TA-Unterlage:"TAFussbodenheizung" Ausgabe 2
- BI-Taschenbuch: "Wie funktioniert das?", 1936, BI Mannheim
- Wieland-Prospekt:"cuprotherm/Fussbodenheizu ng mit Kupferrohr" July 1984

## Beschreibung

Die Erfindung betrifft eine vorgefertigte, schleifenartige Warmwasser- Flächenheizung mit mediumbefüllbaren ( Wasser oder sonstiger Wärmeträger) Rohren, welche geeignet für einen nachträglichen Einbau ist.

Eine solche Flächenheizung ist aus der EP-A-20894 bekannt.

Bei diesem Stand der Technik und generell üblichen Bauformen werden die Warmwasser - Fußbodenheizungen vor der Einbringung des Estrich verlegt. Hierzu wird ein mindestens 16 mm dickes Kunststoffrohr schneckenförmig von außen nach innen kreisend und wieder zwischen den Rohrabständen kreisförmig zurückverlegt.
Das Rundrohr wird in einem Strang aufgebracht. Am Anfang wird Warmwasser eingepumpt, das dann kreisförmig zur Kreismitte fließt und dann umgekehrt wieder zurückkommt. Das Wasser läuft in einer Linie oder Kreis.

Später wird das Kunststoffrohr mit Estrich überdeckt, der mindestens 7cm bis 10 cm dick aufgetragen wird. Der gesamte Bodenaufbau muß folglich aufgeheizt werden, was ca. 6 bis 8 Stunden dauert, bis die Bodenoberfläche Wärme abgeben kann. Ein nachträglicher Einbau, wenn der Estrich liegt, ist undurchführbar. Das eingespeiste Heizungswasser ist anfangs heiß und verliert auf seinem Weg immer mehr an Wärme, sodaß eine gleichmäßige Erwärmung des Fußbodens nicht möglich ist. Es befindet sich viel Wärme im Außenverlauf des Heizkreises und wenig Wärme im Innenverlauf des Heizsystems.
Aus der DE 28 15 416 A1 ist eine Warmwasserflächenheizung mit dem im Oberbegriff des Anspruchs 1 angegebenen Merkmalen bekannt. Von zwei auf einer Trägermatte nebeneinander angebrachten Rohren dient eines dem Vorlauf, das andere dem Rücklauf.
Durch die vorliegende Erfindung wird eine gegenüber diesem Stand der Technik in bezug auf die Wärmeabgabe und die Verlegung im Boden oder in einer Wand verbesserte Warmwasserflächenheizung geschaffen, die dadurch gekennzeichnet ist, dass die Trägermatte eine Gewebeträgermatte ist und die Rohre zwei, jeweils an einem Vor- und Rücklauf endende Warmwasserläufe bilden.

Weiter bevorzugte Ausführungsformen sind Gegenstand von abhängigen Ansprüchen.

An einem von zwei nebeneinander verlegten Rohren beginnt der Heizwasservorlauf und an dem anderen Rohr endet der Heizwasserrücklauf.
Die zwei Warmwasserläufe sind gegenläufig, sodaß neben dem heißen Anfang des einen der kalte Rücklauf des anderen endet. Der Boden erwärmt sich damit gleichmäßig über die gesamt zu beheizende Boden - oder Wandfläche.

Die Rohre sind nicht dicker als 8mm, können aber dünner sein. Sie können so auf den Estrich im Klebemörtelbett des Fliesen - oder Plattenbelages eingebettet werden.

Die Rohre sind schleifenförmig auf einer Gewebeträgermatte aufgebracht, die gleichzeitig einer Armierung des Klebemörtels für den Bodenoberbelag dient.
Die Gewebeträgermatte ist in verschiedenen Bahnenbreiten vorgegeben und aufrollbar. Am Wendepunkt ( vor einer Wand ) wird die Gewebeträgermatte aufgetrennt und in einer neuen Bahn zurück ausgelegt - sogenannte bahnenweise Mäanderverlegung.

Wegen des niedrigen Rohrquerschnittes wird der Wasserflußverlust ( Druckverlust ) durch einen wasserverdünnenden Zusatz herabgesetzt,
Das Medium oder mit Zusatz versetzte Wasser wird von einer Aufheizstation direkt oder über einen Wärmetauscher aufgeheizt, über einen Vor- oder Rücklauftemperaturthermostaten wird die Wassertemperatur geregelt. Eine Umwälzpumpe befördert das Medium.

Die beigefügte Detail- und Bodenaufbauzeichnung verdeutlicht die vorgeschriebenen Punkte und zeigt in:
Fig. 1 die nebeneinander verlegten, schleifenförmigen aufgebrachten Rund- oder Ovalrohren.
Fig. 2 Rohre auf Gewebeträgermatte.
Fig. 3 Mäanderverlegung
Fig. 4 Bodenaufbauzeichnung

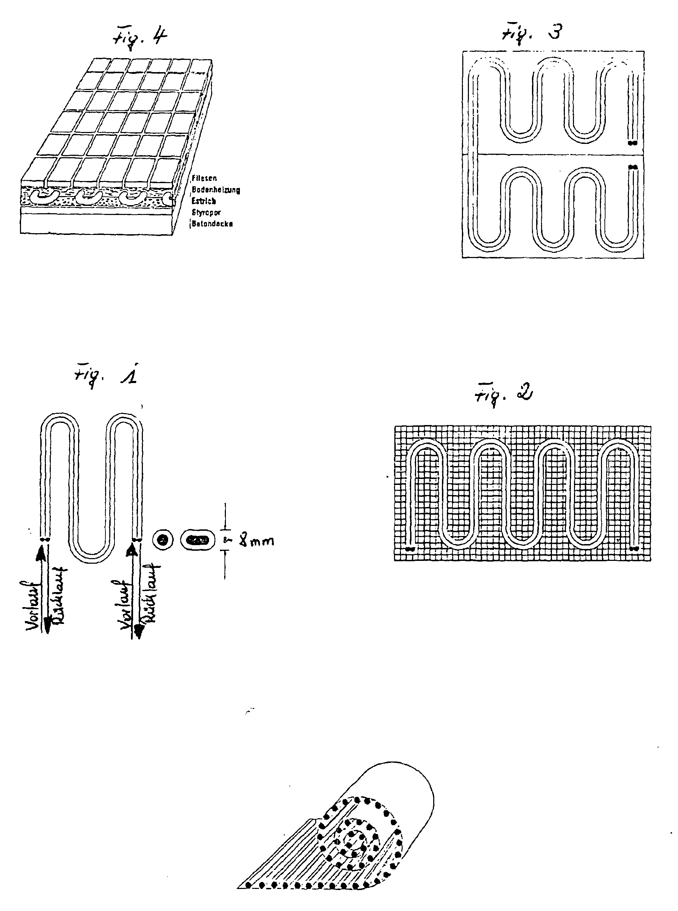

## Patentansprüche

1. Für einen nachträglichen Einbau geeignete Warmwasserflächenheizung mit einem vorgefertigten Heizelement, das eine Trägermatte und schleifenartig auf der Trägermatte aufgebrachte Rund- und/oder Ovalrohre aufweist, die nebeneinander verlegt und zur Durchströmung mit Warmwasser in entgegengesetzten Fließrichtungen vorgesehen sind,
**dadurch gekennzeichnet,**
**dass** die Trägermatte eine Gewebeträgermatte ist und die Rohre zwei, jeweils an einem Vor- und Rücklauf endende Warmwasserläufe bilden.

2. Warmwasserflächenheizung nach Anspruch 1,
**dadurch gekennzeichnet,**
**dass** die Rohrdicke maximal 8 mm beträgt, dass die Rund- oder Ovalrohre mit der Gewebeträgermatte auf der zu beheizenden Fläche ausrollbar sind.

3. Warmwasserflächenheizung nach Anspruch 1 oder 2,
**dadurch gekennzeichnet,**
**dass** die Heizungsrohre samt Gewebeträgermatte im Klebemörtel eines Boden- oder Wandbelags eingebettet sind.

## Claims

1. Plane warm water heater adapted for subsequent installation comprising a prefabricated heating element having a supporting mat and looplike round or/and oval pipes disposed on said the mat, said pipes are arranged side by side and provided for to be flowed through by warm water in opposite directions, **characterized in that** said supporting mat has a web structure and said pipes form two warm water flows which end at an inlet and an outlet respectively.

2. Plan warm water heater according to claim 1, **characterized in that** the maximum pipe thickness is 8 mm and said rounds or oval pipes may be unrolled onto the plane to be heated.

3. Plane warm water heater according to claim 1 or 2, **characterized in that** said heating pipes together with the supporting mat are embedded in the glue for a floor or wall facing.

## Revendications

1. Chauffage de grande surface à eau chaude convenant pour une installation ultérieure avec un élément de chauffage préfabriqué, qui présente une natte support et des tuyaux ronds et/ou ovales placés en boucle sur la natte support, lesdits tuyaux sont placés l'un à côté de l'autre et prévus pour être traversés par de l'eau chaude dans des sens d'écoulement opposés, **caractérisé en ce que** la natte support est une natte support en tissu et que les tuyaux forment deux circuits d'eau, se terminant à chaque fois au niveau de l'alimentation et du retour de l'eau.

2. Chauffage de grande surface à eau chaude selon la revendication 1, **caractérisé en ce que** l'épaisseur des tuyaux est d'au maximum 8 mm, que les tuyaux ronds ou ovales peuvent être déroulés avec la natte support en tissu sur la surface à chauffer.

3. Chauffage de grande surface à eau chaude selon la revendication 1 ou 2, **caractérisé en ce que** les tuyaux de chauffage avec la natte support en tissu sont noyés dans le mortier-colle d'un revêtement de sol ou de paroi.
